# EUROPÄISCHE PATENTSCHRIFT

(11) **EP 1 925 370 B1**
(45) Veröffentlichungstag und Bekanntmachung des Hinweises auf die Patenterteilung: **03.11.2010**
(21) Anmeldenummer: 07115884.4
(22) Anmeldetag: 07.09.2007
(51) Int. Cl.: B05C 17/005

(54) **Mehrkomponentenkartusche**
Multi-component cartridge
Cartouche à plusieurs composants

(30) Priorität: 06.10.2006 DE 102006047811
(43) Veröffentlichungstag der Anmeldung: 28.05.2008
(73) Patentinhaber: Sulzer Chemtech AG, 8404 Winterthur (CH)
(72) Erfinder: Heusser, Rolf, 8400 Winterthur (CH); Staub, Andreas, 8404 Winterthur (CH)
(74) Vertreter: Sulzer Management AG

(56) Entgegenhaltungen:
- EP-A- 0 378 806
- EP-A- 0 579 889
- EP-A- 0 603 492
- EP-A- 0 885 651
- EP-A- 1 426 099
- WO-A-01/05321
- WO-A-2006/005213
- DE-A1- 10 254 409
- JP-A- 62 091 261
- US-A- 5 413 253

## Beschreibung

Die Erfindung betrifft eine Mehrkomponentenkartusche nach dem Oberbegriff des Anspruchs 1.

Eine Eingangs genannte Mehrkomponentenkartusche zeigt die DE 102 54 409 A1. Die dortige Vorrichtung zum Mischen und Ausbringen von Mehrkomponentenmassen weist einen Behälter mit zwei Kammern für zwei unterschiedliche, fließfähige Komponenten auf, beispielsweise für Dentalzwecke. Um die Komponenten vor dem Austragen vermischen zu können, ist an einem zylinderförmigen Vorsprung an einem Ende der Kammern eine Mischwendel angeordnet. Diese Mischwendel wird von einer an einer Kappe angeordneten gekrümmten Auslassröhre umfasst. Die Kappe ist drehbar auf einen zylinderförmigen Vorsprung der Kammern aufgesetzt und kann so gedreht werden, dass die gekrümmte Auslassröhre in die für den Austrag der in der Auslassröhre vermischten Komponenten gewünschte Richtung gedreht werden kann. Hierzu ist die Mischwendel flexibel ausgebildet und krümmt sich jeweils in die Richtung der Auslassröhre. Im Auslieferungszustand der Vorrichtung befindet sich die Kappe in geschlossenem Zustand, in welchem sie Auslassöffnungen der Kammern verschließt. Um die in den Kammern enthaltenen Komponenten austragen zu können, werden die Komponenten mittels eines Kolbens ausgedrückt, wobei die Kammer alleine durch den Druck der Komponenten von der geschlossenen Stellung in eine geöffnete Stellung springt. Dies weist zwar den Vorteil auf, dass das Austragsrohr durch Drehen in eine geeignete Austragsstellung gebracht werden kann, z.B. zum Aufbringen von Dentalmasse auf oder in die Zähne eines Patienten. Jedoch ist die Montage der Kappe sehr schwierig, da die flexible Mischwendel das schnelle und einfache Aufsetzen der Kappe mit dem Austragsrohr erschwert. So müsste die empfindliche flexible Mischstruktur vorsichtig in das Austragsrohr eingesetzt werden, wobei gleichzeitig auf den richtigen Sitz der Kappe auf dem zylinderförmigen Vorsprung geachtet werden müsste. Auch das Verschieben der Kappe zwischen der geöffneten und der geschlossenen Stellung birgt die Gefahr des Verkippens der Kappe und der Beschädigung der Mischwendel.

Um das Aufsetzen eines Austragsrohrs auf einer Mehrkomponentenkartusche zu vereinfachen, wurden im Stand der Technik mit speziellen Kopplungseinrichtungen versehene Austragsrohre vorgeschlagen, die auch nachträglich auf die Kammern aufgesetzt werden können. So zeigt beispielsweise die DE 20 2006 004 738 U1 eine Vorrichtung für das Mischen zweier Fluide, bei der Mittels eines Adapterelements zwei Spritzenteile sicher aneinander befestigt werden können. An der den Spritzenteilen abgewandten Seite des Adapterelements kann eine Tülle mit einem darin angeordneten Mischelement angeordnet werden, wobei diese durch ein Koppelelement ähnlich einem Bajonettverschluss verbunden werden. Ein weiteres aufsetzbares Austragsrohr mit darin befindlicher Mischerstruktur zeigt die EP 0 319 135 A2. Dort wird eine Verdrehsicherung durch eine am Spritzenteil angeordnete Trennwand bereitgestellt, welche in einen korrespondierenden Schlitz an dem Austragsrohr eingreift. Um eine Beschädigung des Mischerelements zu verhindern, wird dieses vor dem Aufsetzen des Austragsrohr bereits in dieser angeordnet. In keiner der bekannten Vorrichtungen wird jedoch auf einfache Weise sichergestellt, dass das Austragsrohr beim Aufsetzen sauber auf dem Spritzenteil angeordnet werden kann, ohne das Mischerelement zu beschädigen. Auch besteht die Gefahr, dass das Austragsrohr nicht sauber auf dem Spritzenteil aufgesetzt wird, so dass beim Ausdrücken der Spritzen die Komponenten seitlich an den Verbindungsstellen zwischen Spritzenteilen und Austragsrohr austreten können.

Aufgabe der vorliegenden Erfindung ist es deshalb, eine Mehrkomponentenkartusche der eingangs genannten Art bereit zu stellen, die ein einfaches und sicheres Aufsetzen eines Austragsrohrs auf einen Behälter der Mehrkomponentenkartusche sowie Hin- und Herbewegen zwischen einer geöffneten und einer geschlossenen Stellung der Mehrkomponentenkartusche ermöglicht.

Diese Aufgabe wird durch eine Mehrkomponentenkartusche mit den Merkmalen des Anspruchs 1 gelöst. Vorteilhafte Ausgestaltungen und zweckmäßige Weiterbildungen der Erfindung sind in den Unteransprüchen angegeben.

Bei der erfindungsgemäßen Mehrkomponentenkartusche kann dadurch, dass das Mischerelement als Führungselement zur axialen Verschiebung des Austragsrohrs ausgebildet ist, das Aufsetzen und Verschieben des Austragsrohrs am Behälter der Mehrkomponentenkartusche vorteilhaft ermöglicht werden.

Um die verschiebbare Führung des Austragsrohrs zu verbessern, sind in vorteilhafter Weise die Außenkontur des Mischerelements und die Innenkontur des Austragsrohrs aufeinander abgestimmt. Weiter können in einer besonderes vorteilhaften Ausführung die Außenkontur des Mischerelements und die Innenkontur des Austragsrohrs so aufeinander abgestimmt sein, dass das Austragsrohr nur in einer vorgegebenen Stellung auf das Mischerelement aufgesetzt werden kann. Bei der Produktion kann das Austragsrohr dann nicht mehr verkehrt aufgesetzt werden, wodurch ein fehlerhaftes Aufsetzen des Austragsrohrs auf dem Mischerelement ausgeschlossen ist. Erfindungsgemäß ist vorgesehen, dass die Außenkontur des Mischerelements und die Innenkontur des Austragsrohrs rechteckig oder elliptisch sind.

Hierbei kann zusätzlich eine sichere Führung des Austragsrohrs ermöglicht werden, wenn der Behälter an seiner mischerseitigen Ende einen rechteckig oder elliptisch geformten Ausgabebereich aufweist, der von einem entsprechend geformten Ansatzbereich des Austragsrohrs umgriffen wird.

Um eine Fixierung des Austragsrohrs in einer geöffneten Stellung und/oder in einer geschlossenen Stellung des Austragsrohrs sicherzustellen, sind in einer vorteilhaften Ausführung der Erfindung am Behälter und/oder dem Austragsrohr Halteelemente, insbesondere Rastnasen und korrespondierende Rastnuten, vorgesehen. Hierdurch können einerseits die Komponenten störungsfrei ausgegeben werden, andererseits aber die Kammern abdichtend verschlossen werden, wodurch ein Austrocknen oder frühzeitiges Aushärten der in den Kammern vorhandenen Komponenten verhindert werden kann. Besonders vorteilhaft können Ausgabeöffnungen der Kammern durch an dem Austragsrohr angeordnete korrespondierende Dichtelemente abdichtend verschlossen werden. Zudem helfen die Rastnasen und -nuten dem Anwender sicherzustellen, dass sich das Austragsrohr in der richtigen Position befindet.

Um ein versehentliches Abziehen des Austragsrohrs vom Behälter zu vermeiden und dennoch ein ordnungsgemäßes Austragen der Komponenten aus den Kammern in das Austragsrohr zu ermöglichen, sind am Behälter und/oder dem Austragsrohr Sicherungselemente vorgesehen.

In einer fertigungstechnisch vorteilhaften Ausführung besteht das Mischerelement aus einem formstabilen Material, wobei es vorteilhaft ist, Mischerelement und den Behälter einstückig auszuformen.

Weitere Besonderheiten und Vorzüge der Erfindung ergeben sich aus der folgenden Beschreibung eines bevorzugten Ausführungsbeispiels anhand der Zeichnungen. Es zeigen
- **Fig. 1**: eine dreidimensionale Ansicht einer Mehrkomponentenkartusche mit aufgesetztem Austragsrohr in einer geschlossenen Stellung;
- **Fig. 2**: eine dreidimensionale Ansicht eines Ausschnitts der Mehrkomponentenkartusche aus Fig. 1 ohne Austragsrohr;
- **Fig. 3**: einen Querschnitt durch das austragseitige Ende eines Behälters der Mehrkomponentenkartusche aus Fig. 2 ohne Austragsrohr;
- **Fig. 4**: den Querschnitt aus Fig. 3 mit Austragsrohr in einer geöffneten Stellung;
- **Fig. 5**: eine Detailansicht des oberen Endes des Behälters aus Fig. 4;
- **Fig. 6**: eine dreidimensionale Ansicht entsprechend dem Detail aus Fig. 5;
- **Fig. 7**: eine schematische Ansicht des oberen Endes des Behälters mit aufgesetztem Austragsrohr in geöffneter Stellung;
- **Fig. 8**: die Darstellung aus Fig. 7 mit dem Austragsrohr in geschlossener Stellung.

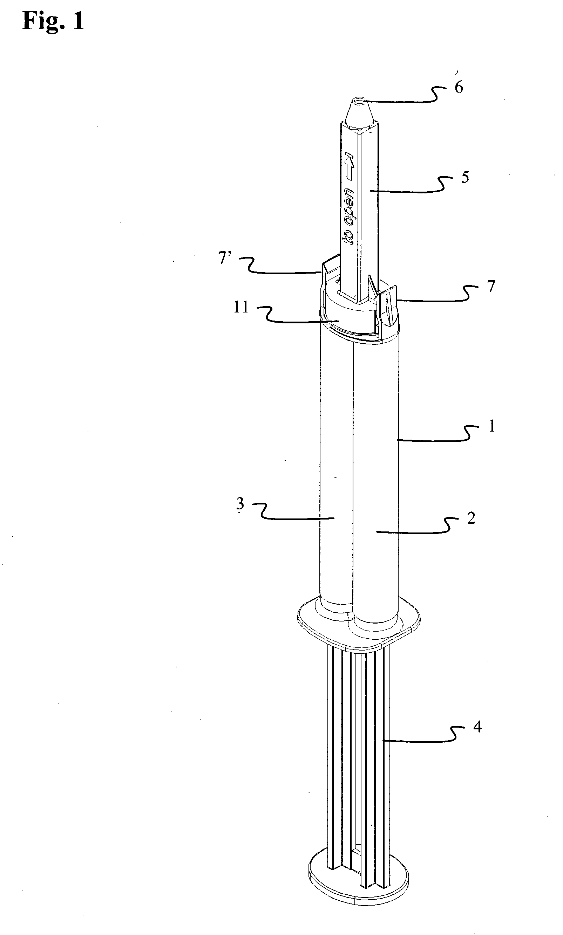

Die in Fig. 1 als Doppelspritze ausgebildete Mehrkomponentenkartusche weist einen Behälter 1 auf, der zwei im wesentlichen zylinderförmige und fest miteinander verbundene Kammern 2, 3 zur Aufnahme unterschiedlicher Komponenten aufweist. Die Komponenten sind hier die beiden Komponenten eines Zwei-Komponenten-Klebstoffes, welche erst kurz vor dem Auftragen auf die zu klebenden Gegenstände miteinander vermischt werden dürfen. Es können aber auch anderen Komponenten in den Kammern gelagert werden, beispielsweise für Dentalanwendungen.

Um die Komponenten aus den Kammern 2, 3 ausdrücken zu können, weist die Mehrkomponentenkartusche, wie bei derartigen Doppelspritzen üblich, einen Ausdrückstößel 4 auf, welcher von in Fig. 1 unten zum anderen Ende der Mehrkomponentenkartusche hin gedrückt werden kann. Am anderen, austragsseitigen Ende der Kammern 2, 3 ist ein Austragsrohr 5 angeordnet. Das Austragsrohr 5 weist im wesentlichen quadratischen Querschnitt und eine Austragsöffnung 6 zum Austragen der vermischten Komponenten auf. Dieses wird durch entsprechend ausgebildete Sicherungselemente 7, 7' in einer in Fig. 1 gezeigten geschlossenen Stellung gehalten, wobei die Funktionsweise der Sicherungselemente 7, 7' später detailliert erläutert wird.

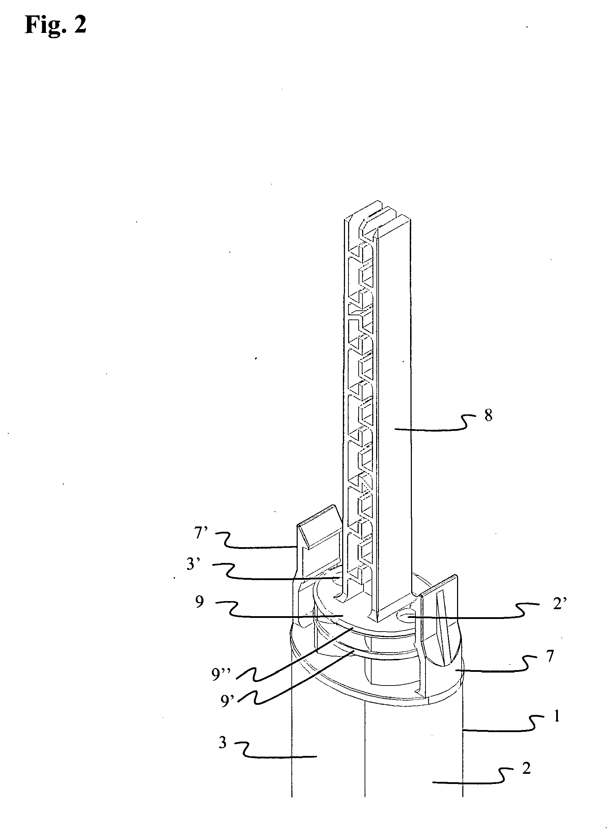

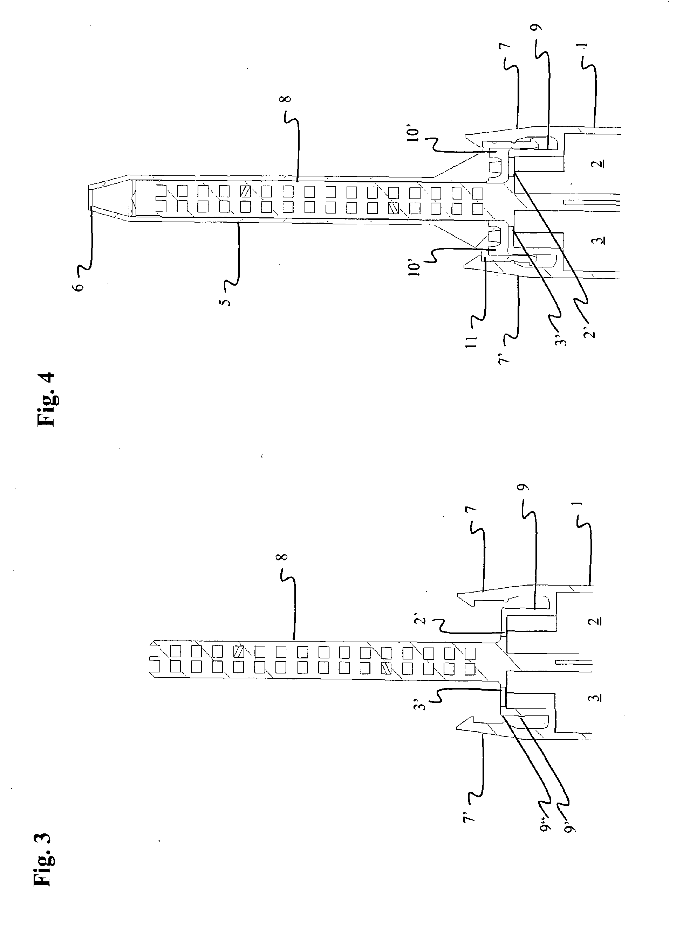

Wie aus Fig. 2, 3 hervorgeht, in denen das austragsseitige Ende des Behälters 1 ohne Austragsrohr 5 gezeigt ist, ist ein mit zahlreichen Umlenkelementen versehenes Mischerelement 8 an einem im Wesentlichen elliptischen geformten Ausgabebereich 9 des Behälters 1 vorgesehen. Der Ausgabebereich 9 verlängert die Kammern 2, 3 kanalförmig zu Ausgabeöffnungen 2', 3' an seinem oberen Ende hin, durch welche die Komponenten aus den Kammern 2, 3 in den durch das aufgesetzte Austragsrohr 5 gebildeten Mischraum 10, 10' ausgegeben werden können, wenn sich das Austragsrohr 5 in der in Fig. 4 gezeigten geöffneten Stellung befindet.

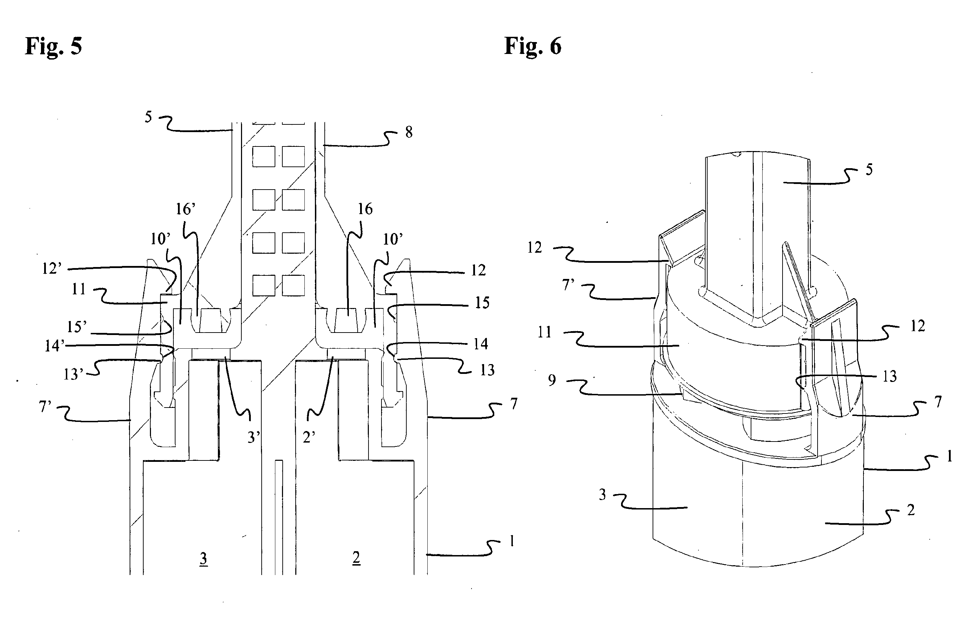

Wie besonders gut in Fig. 5 erkennbar, können die Komponenten durch Eindrücken des Ausdrückstößels 4 zur Austragsseite des Behälters 1 hin in den im Wesentlichen elliptischen Mischraum 10 fließen. Aufgrund des Drucks auf die Komponenten fließen sie weiter durch das Mischerelement 8 und das Austragsrohr 5 zur Austragsöffnung 6 hin, wobei sie im Mischerelement 8 gleichmäßig und effizient vermischt werden.

Um das Austragsrohr 5 sicher in der in den Figuren 4 bis 7 gezeigten geöffneten Stellung zu halten, weist das Austragsrohr 5 an seinem kammerseitigen Ende einen zu dem elliptisch geformten Ausgabebereich 9 des Behälters 1 entsprechend geformten Ansatzbereich 11 auf, der insbesondere im Zusammenwirken mit ellipsenförmigen umlaufenden Vorsprüngen 9', 9" eine sichere Führung des Austragsrohrs 5 von der geöffneten in die geschlossene Stellung und zurück ermöglicht. Um zu verhindern, dass das Austragsrohr 5 von dem Behälter 1 aus Versehen, z. B. beim Öffnen des Austragsrohres 5, abgezogen wird, weisen die Sicherungselemente 7, 7' an ihrem austragsseitigen Ende Rastnasen 12, 12' auf, die beim Aufsetzen des Auftragsrohrs 5 auf Grund der flexibel ausgebildeten Sicherungselemente 7, 7' und der abgeschrägten kammerseitigen Enden des Ansatzbereichs 11 nach außen gedrückt werden können. Nach dem Aufsetzen des Austragsrohrs 5 greifen die Rastnasen 12, 12' dann über die im Wesentlichen waagrechten Flächen des Ansatzbereichs 11 ein und verhindern somit dessen Abziehen.

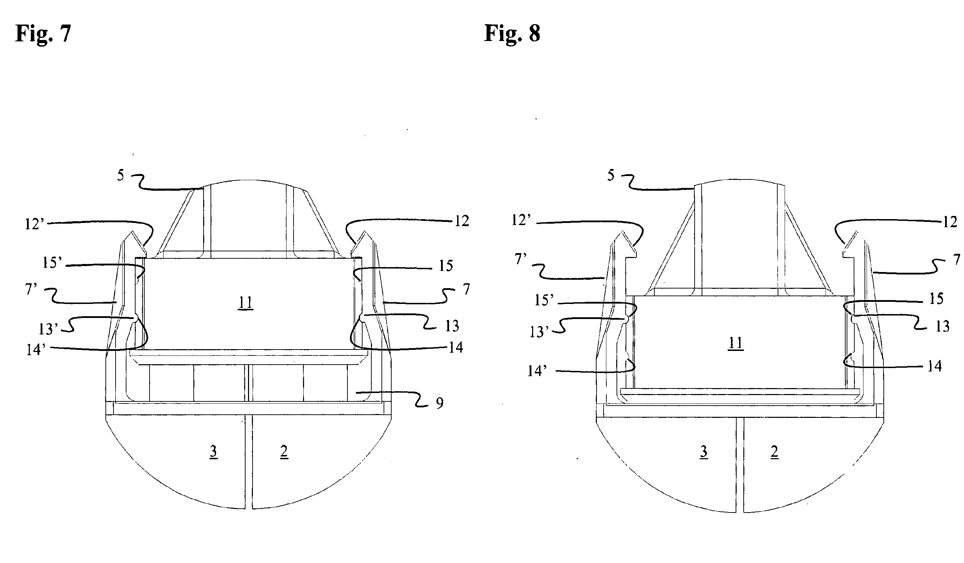

Um das Austragsrohr 5 in der geöffneten Stellung zu halten, sind an den Sicherungselementen 7, 7' Halteelemente in Form von Rastvorsprüngen 13, 13' vorgesehen, die in entsprechende Rastnuten 14, 14' am Austragsrohr 5 eingreifen, wie in Fig. 7 besonders gut erkennbar. Um auch in der in Fig. 8 gezeigten geschlossenen Stellung das Austragsrohr 5 in dieser Stellung zu fixieren, weist der Ansatzbereich 11 des Austragsrohrs 5 zusätzliche Rastnuten 15, 15' auf, welche wiederum in die an den Sicherungselementen 7, 7' angeordneten Rastvorsprünge 13 eingreifen.

Um in der geschlossenen Stellung des Austragsrohrs 5 die Ausgabeöffnungen 2', 3' abdichtend verschließen zu können, weist die Innenseite des Ansatzbereichs 11 zwei im Wesentlichen kreisringförmige, sich zur Austragsseite nach innen hin verjüngende, im Querschnitt kegelstumpfförmige Verschlussstopfen 16, 16' auf. Aufgrund ihrer speziellen Form ermöglichen die Verschlussstopfen 16, 16' das Verschließen der Ausgabeöffnungen 2', 3', wobei zum Herausziehen der Verschlussstopfen 16, 16' aus den Ausgabeöffnungen 2', 3' eine gewisse Kraft überwunden werden muss, um zusätzlich zu den Halteelementen 13, 13' und 14, 14' ein versehentliches Öffnen des Austragsrohrs 5 zu verhindern.

Bei der in den Zeichnungen dargestellten Ausführungsform der Erfindung wird die Führung des Austragsrohrs 5 auf dem Mischerelement 8 durch deren aneinander angepasste quadratische Innen- bzw. Außenkontur sichergestellt, der Querschnitt sowohl des Mischerelements 8 als auch des Austragsrohrs 5 ist also im wesentlichen quadratisch. Damit die Komponenten möglichst vollständig durch das Mischerelement 8 gedrückt werden, ist der Abstand zwischen der Innenkontur des Austragsrohrs 5 und der Außenkontur des Mischerelements 8 möglichst klein, wobei das Verschieben des Austragsrohrs 5 noch möglich sein muss. Zusätzlich lässt sich ein fehlerhaftes Aufsetzen des Austragsrohrs 5 auf dem Mischerelement 8 durch die von außen gut erkennbare Ausrichtung der elliptischen Form des Ansatzbereichs 11 sowie des Ausgabebereichs 9 des Behälters 1 verhindern. Da das Mischerelement 8 aus einem formstabilen Material besteht, wird eine sichere Führung des Austragsrohrs 5 ausschließlich in axialer Längsrichtung der Mehrkomponentenkartusche sicher gestellt.

In einer alternativen, hier nicht zeichnerisch dargestellten Ausführung der Erfindung sind die Außenkontur des Mischerelements 8 und die Innenkontur des Austragsrohrs 5 rechteckförmig, weisen also im wesentlichen rechteckigen Querschnitt auf, so dass bereits hierdurch eine verdrehsichere Führung des Austragsrohrs 5 sichergestellt wird. Zudem ist bei einer derartigen Ausführung vorteilhaft, dass das Austragsrohr 5 ausschließlich in der für das sichere Abdichten und Eingreifen der Verschlussstopfen 16, 16' in die Ausgabeöffnungen 2', 3' notwendigen Stellung auf das Mischerelement 8 aufgesetzt werden kann. In diesem Fall kann der Ansatzbereich 11 des Austragsrohres 5 und der Ausgabebereich 9 des Behälters 1 auch andere Formen mit anderem Querschnitt aufweisen, beispielsweise kreisförmig. Durch die spezielle Ausformung des Mischerelements 8 wird trotzdem sicher gestellt, dass die Ausgabeöffnungen 2' bzw. 3' und die Stopfen 16, 16' stets ineinander eingreifen.

An Stelle der beim zeichnerisch dargestellten Ausführungsbeispiel gezeigten Sicherungselemente 7, 7' mit daran angeordneten Rastnasen 12, 12' können auch andere geeignete Sicherungsmittel vorgesehen werden. Auch können anstelle der Rastnuten 14, 14' bzw. 15, 15' entsprechende Rastvorsprünge am Ansatzbereich 11 des Austragsrohrs 5 vorgesehen werden, wobei anstelle des Rastvorsprungs 13, 13' an den Sicherungselementen 7, 7' dann entsprechende Rastnuten vorzusehen sind.

## Patentansprüche

1. Mehrkomponentenkartusche mit einem Behälter (1), der Kammern (2, 3) zur Aufnahme unterschiedlicher fluider Komponenten aufweist, wobei am Austrittsende des Behälters ein Ausgabebereich (9) vorgesehen ist, wobei der Ausgabebereich (9) die Kammern (2,3) kanalförmig zu Ausgabeöffnungen (2', 3') an seinem oberen Ende hin verlängert, wobei die Komponenten durch die Ausgabeöffnungen (2', 3') aus den Kammern (2, 3) in einen Mischraum (10, 10') ausgegeben werden können, wobei der Mischraum von einem fest am Behälter (1) angeordneten statischen Mischerelement (8) zum Vermischen der Komponenten und einem auf das statische Mischerelement (8) aufgesetztem und mit dem Behälter (1) verbindbaren Austragsrohr (5) zum Austragen der Komponenten eingeschlossen ist, wenn sich das Austragsrohr (5) in seiner geöffneten Stellung befindet, wobei das statische Mischerelement (8) als Führungselement zur axialen Verschiebung des Austragsrohrs (5) ausgebildet ist und am Behälter (1) und/oder dem Austragsrohr (5) Sicherungselemente (7, 7') vorgesehen sind, um ein Abziehen des Austragsrohrs (5) vom Behälter (1) zu verhindern und die Außenkontur des statischen Mischerelements (8) und die Innenkontur des Austragsrohrs (5) rechteckig oder elliptisch sind.

2. Mehrkomponentenkartusche nach Anspruch 1, **dadurch gekennzeichnet, dass** die Außenkontur des statischen Mischerelements (8) und die Innenkontur des Austragsrohrs (5) zur verschiebbaren Führung des Austragsrohrs (5) auf dem statischen Mischerelement (8) aufeinander abgestimmt sind.

3. Mehrkomponentenkartusche nach Anspruch 1 oder 2, **dadurch gekennzeichnet, dass** die Außenkontur des statischen Mischerelements (8) und die Innenkontur des Austragsrohrs (5) so aufeinander abgestimmt sind, dass das Austragsrohr (5) nur in einer vorgegebenen Stellung auf das statische Mischerelement (8) aufgesetzt werden kann.

4. Mehrkomponentenkartusche nach einem der vorangehenden Ansprüche, **dadurch gekennzeichnet, dass** am Behälter (1) und/oder dem Austragsrohr (5) Halteelemente (13, 13', 14, 14', 15, 15') vorgesehen sind, um das Austragsrohr (5) in einer geöffneten Stellung zum Austragen der Komponenten aus dem Austragsrohr (5) und/oder in einer geschlossenen Stellung zum abdichtenden Verschließen der Kammern (2, 3) zu halten.

5. Mehrkomponentenkartusche nach Anspruch 4, **dadurch gekennzeichnet, dass** die Halteelemente durch Rastnuten (14, 14', 15, 15') an dem Austragsrohr (5) und Rastnasen (13, 13') an dem Behälter (1) gebildet sind.

6. Mehrkomponentenkartusche nach einem der vorangehenden Ansprüche, **dadurch gekennzeichnet, dass** der Ausgabebereich (9) am mischerseitigen Ende des Behälters (1) rechteckig oder elliptisch geformt ist und von einem entsprechend geformten Ansatzbereich (11) des Austragsrohrs (5) umgriffen wird.

7. Mehrkomponentenkartusche nach einem der vorangehenden Ansprüche, **dadurch gekennzeichnet, dass** in der geschlossenen Stellung (Fig. 8) an dem Austragsrohr (5) angeordnete Dichtelemente (16, 16') die Ausgabeöffnungen (2', 3') der Kammern (2, 3) abdichtend verschließen.

8. Mehrkomponentenkartusche nach Anspruch 7, **dadurch gekennzeichnet, dass** die Dichtelemente (16, 16') als im Wesentlichen kreisringförmige, sich zur Austragsseite nach innen hin verjüngende, im Querschnitt kegelförmige Verschlusstopfen ausgebildet sind.

9. Mehrkomponentenkartusche nach einem der vorangehenden Ansprüche, **dadurch gekennzeichnet, dass** die Sicherungselemente (7, 7') flexibel ausgebildet sind und an ihrem austragsseitigen Ende Rastnasen (12, 12') aufweisen, die beim Aufsetzen des Auftragsrohrs (5 )aufgrund der flexibel ausgestalteten Sicherungselemente (7,7') und der abgeschrägten kammerseitigen Enden des Ansatzbereichs (9) nach außen gedrückt werden können.

10. Mehrkomponentenkartusche nach Anspruch 9, **dadurch gekennzeichnet, dass** die Rastnasen (12, 12') nach dem Aufsetzen des Austragsrohrs (5) über die im wesentlichen waagrechten Flächen des Ansatzbereichs (11) greifen.

11. Mehrkomponentenkartusche nach einem der vorangehenden Ansprüche, **dadurch gekennzeichnet, dass** das statische Mischerelement (8) aus einem formstabilen Material besteht.

12. Mehrkomponentenkartusche nach einem der vorangehenden Ansprüche, **dadurch gekennzeichnet, dass** das statische Mischerelement (8) und der Behälter (1) einstückig geformt sind.

## Claims

1. A multicomponent cartridge with a container (1) having chambers (2, 3) for the reception of different fluid components, whereby the container (1) has a dispensing region (9) at its discharge end, wherein the discharge region (9) continues as a passage of the chambers (2, 3) to dispensing openings (2', 3') arranged on the upper end thereof, such that the components can be dispensed through the dispensing openings (2', 3') from the chambers (2, 3) into a mixing space (10, 10') whereby the mixing space is enclosed by a static mixer element (8) fixedly arranged at the container (1) for the mixing of the components and a dispensing tube (5) which is placed onto the mixer element (8) and which is connectable to the container (1) for the dispensing of the components, if the dispensing tube (5) is in its open position, wherein the mixer element (8) is configured as a guide element for the axial displacement of the dispensing tube (5) and securing elements (7, 7') are provided at the container (1) and/or at the dispensing tube (5) to prevent the dispensing tube (5) from being pulled off the container (1) and the outer contour of the mixer element (8) and the inner contour of the dispensing tube (5) are rectangular or elliptical.

2. A multicomponent cartridge in accordance with claim 1, **characterised in that** the outer contour of the mixer element (8) and the inner contour of the dispensing tube (5) are matched to one another for the displaceable guidance of the dispensing tube (5) on the static mixer element (8).

3. A multicomponent cartridge in accordance with claim 1 or claim 2, **characterised in that** the outer contour of the mixer element (8) and the inner contour of the dispensing tube (5) are matched to one another such that the dispensing tube (5) can only be placed onto the mixer element (8) in a predetermined position.

4. A multicomponent cartridge in accordance with any one of the preceding claims, **characterised in that** holding elements (13, 13', 14, 14', 15, 15') are provided on the container (1) and/or on the dispensing tube (5) to hold the dispensing tube (5) in an open position (Fig. 7) for dispensing of components from the dispensing tube (5) and/or in a closed position (Fig. 8) for sealingly closing the chambers (2, 3).

5. A multicomponent cartridge in accordance with claim 4, **characterised in that** the holding elements are formed by latch grooves (14, 14', 15, 15') and the dispensing tube (5) and by latch projections (13, 13') at the container (1).

6. A multicomponent cartridge in accordance with any one of the preceding claims, **characterised in that** the container (1) has a dispensing region (9) at its end at the mixer side which is of rectangular or elliptical shape which is engaged around by a correspondingly shaped shoulder region (11) of the dispensing tube (5).

7. A multicomponent cartridge in accordance with any one of the preceding claims, **characterised in that**, in the closed position (Fig. 8), sealing elements (16, 16') arranged at the dispensing tube (5) sealingly close the dispensing openings (2', 3') of the chambers (2, 3).

8. A multicomponent cartridge in accordance with claim 7, **characterised in that** the sealing elements (16, 16') are configured as substantially annular stoppers, which are of a conical cross-section and are of decreasing size when moving from the discharge side to the interior.

9. A multicomponent cartridge in accordance with any one of the preceding claims, **characterised in that** the securing elements (7, 7') are flexible and have latch noses (12, 12') which can be pressed outwardly when placing the dispensing tube (5) as the securing elements (7, 7') are flexible and the chamber side ends of the dispensing region (9) are of bevelled configuration.

10. A multicomponent cartridge in accordance with claim 9, **characterised in that** the latch noses (12, 12') are engaged around the substantially horizontal areas of the shoulder region (11) of the dispensing tube (5) after the placing of the dispensing tube (5).

11. A multicomponent cartridge in accordance with any one of the preceding claims, **characterised in that** the mixer element (8) consists of a material of stable shape.

12. A multicomponent cartridge in accordance with any one of the preceding claims, **characterised in that** the mixer element (8) and the container (1) are made in one single piece.

## Revendications

1. Cartouche à plusieurs composants avec un contenant (1) qui présente des chambres (2, 3) pour la réception de composants fluides différents, où est prévu à l'extrémité de sortie du contenant une zone d'émission (9), où la zone d'émission (9) prolonge les chambres (2, 3) en forme de canal à des ouvertures d'émission (2', 3') à son extrémité supérieure, où les composants peuvent être émis à travers l'ouverture d'émission (2', 3') des chambres (2, 3) dans une enceinte de mélange (10, 10'), où l'enceinte de mélange est renfermée par un élément de mélange statique (8) disposé fixement au contenant (1) pour le mélange des composants, et un tube d'évacuation (5) pouvant être placé sur l'élément de mélange statique (8) et pouvant être relié au contenant (1) pour l'évacuation des composants, lorsque le tube d'évacuation (5) se trouve dans sa position ouverte, où l'élément de mélange statique (8) est réalisé comme élément de guidage pour le déplacement axial du tube d'évacuation (5), et au contenant (1) et/ou au tube d'évacuation (5), des éléments de sécurité (7, 7') sont prévus pour empêcher un retrait du tube d'évacuation (5) du contenant (1), et en ce que le contour extérieur de l'élément de mélange statique (8) et le contour intérieur du tube d'évacuation (5) sont rectangulaires ou elliptiques.

2. Cartouche à plusieurs composants selon la revendication 1, **caractérisée en ce que** le contour extérieur de l'élément de mélange statique (8) et le contour intérieur du tube d'évacuation (5), pour le guidage déplaçable du tube d'évacuation (5) sur l'élément de mélange statique (8), sont adaptés l'un à l'autre.

3. Cartouche à plusieurs composants selon la revendication 1 ou 2, **caractérisée en ce que** le contour extérieur de l'élément de mélange statique (8) et le contour intérieur du tube d'évacuation (5) sont adaptés de telle sorte l'un à l'autre que le tube d'évacuation (5) peut être placé seulement dans une position prédéfinie sur l'élément de mélange statique (8).

4. Cartouche à plusieurs composants selon l'une des revendications précédentes, **caractérisée en ce que** sont prévus au contenant (1) et/ou au tube d'évacuation (5) des éléments de retenue (13, 13', 14, 14', 15, 15') pour tenir le tube d'évacuation (5) dans sa position ouverte pour l'évacuation des composants du tube d'évacuation (5) et/ou dans une position fermée pour la fermeture étanche des chambres (2, 3).

5. Cartouche à plusieurs composants selon la revendication 4, **caractérisée en ce que** les éléments de retenue sont formés par des rainures d'encliquetage (14, 14', 15, 15') au tube d'évacuation (5) et des ergots d'encliquetage (13, 13') au contenant (1).

6. Cartouche à plusieurs composants selon l'une des revendications précédentes, **caractérisée en ce que** la zone d'émission (9) à l'extrémité côté mélangeur du contenant (1), est de forme rectangulaire ou elliptique, et est entourée par une zone rapportée (11) formée d'une manière correspondante du tube d'évacuation (5).

7. Cartouche à plusieurs composants selon l'une des revendications précédentes, **caractérisée en ce qu'**en position fermée (Fig. 8), des éléments d'étanchéité (16, 16') disposés au tube d'évacuation (5) ferment d'une manière étanche les ouvertures d'émission (2', 3') des chambres (2, 3).

8. Cartouche à plusieurs composants selon la revendication 7, **caractérisée en ce que** les éléments d'étanchéité (16, 16') sont réalisés sous forme de bouchons de fermeture sensiblement en forme d'anneau de cercle, diminuant vers le côté d'évacuation vers l'intérieur, d'une forme conique en section transversale.

9. Cartouche à plusieurs composants selon l'une des revendications précédentes, **caractérisée en ce que** les éléments de sécurité (7, 7') sont réalisés d'une manière flexible et présentent à leur extrémité côté évacuation des ergots d'encliquetage (12, 12') qui, lors de la mise en place du tube d'évacuation (5), en raison des éléments de sécurité (7, 7') réalisés d'une manière flexible et des extrémités chanfreinées côté chambre de la zone rapportée (9), peuvent être poussés vers l'extérieur.

10. Cartouche à plusieurs composants selon la revendication 9, **caractérisée en ce que** les ergots d'encliquetage (12, 12'), après la mise en place du tube d'évacuation (5), passent sur les faces sensiblement horizontales de la zone rapportée (11).

11. Cartouche à plusieurs composants selon l'une des revendications précédentes, **caractérisée en ce que** l'élément de mélange statique (8) est constitué d'un matériau de forme stable.

12. Cartouche à plusieurs composants selon l'une des revendications précédentes, **caractérisée en ce que** l'élément de mélange statique (8) et le contenant (1) sont réalisés en une pièce.
